Europäisches Patentamt

European Patent Office

Office européen des brevets

(11) Publication number: **0 098 596**
**B1**

# EUROPEAN PATENT SPECIFICATION

(45) Date of publication of patent specification: **07.01.88**

(51) Int. Cl.⁴: **G 01 T 1/29**

(21) Application number: **83106579.2**

(22) Date of filing: **05.07.83**

(54) Radiation image read-out method and apparatus.

(30) Priority: **06.07.82 JP 117383/82**

(43) Date of publication of application:
**18.01.84 Bulletin 84/03**

(45) Publication of the grant of the patent:
**07.01.88 Bulletin 88/01**

(84) Designated Contracting States:
**DE FR NL**

(56) References cited:
**EP-A-0 032 521**
**EP-A-0 098 574**
**GB-A-1 065 020**
**US-A-3 777 163**
**US-A-4 276 473**

(73) Proprietor: **FUJI PHOTO FILM CO., LTD.**
**210 Nakanuma Minamiashigara-shi**
**Kanagawa-ken, 250-01 (JP)**

(72) Inventor: **Yamamoto, Takaaki Fuji Photo Film
Co., Ltd.**
**798 Miyanodai Kaisei-machi**
**Ashigarakami-gun Kanagawa-ken (JP)**
Inventor: **Takano, Masao Fuji Photo Film Co.,
Ltd.** .
**798 Miyanodai Kaisei-machi**
**Ashigarakami-gun Kanagawa-ken (JP)**

(74) Representative: **Klunker, Hans-Friedrich, Dr.
et al**
**Patentanwälte Klunker . Schmitt-Nilson . Hirsch
Winzererstrasse 106**
**D-8000 München 40 (DE)**

Courier Press, Leamington Spa, England.

## Description

This invention relates to a radiation image read-out method in a radiation image recording and read-out system using a stimulable phosphor sheet, and an apparatus for carrying out the method.

A radiation image recording and read-out system using a stimulable phosphor is disclosed, for example, in U.S. Patent Nos. US—A—4,258,264 and US—A—4,315,318, and Japanese Unexamined Patent Publication No. 56(1981)—11395. The method was also announced at meetings of the radiation society, in "Nikkan Kogyo Shinbun" (Daily Industrial Newspaper), June 23, 1981 issue, page 16 and the like, and attracted attention in various fields.

The aforesaid system provides various radiation images useful for viewing, particularly for diagnostic purposes, which could not be obtained by the conventional radiography using a silver halide photographic material. Further, the system can further improve the diagnostic effects when combined with an up-to-date medical image recording technique such as computed tomography (CT) or introduction of radio-isotope into human bodies. Therefore, the system is very effective for viewing purposes, particularly for medical diagnosis.

The aforesaid system generally comprises the steps of (i) recording (recording and storing a radiation image in a stimulable phosphor), (ii) read-out (converting the stored image into an image signal, and sometimes storing the read-out image signal), and (iii) reproducing (converting the image signal into a visible image, i.e. displaying the visible image on a display device such as a cathode ray tube or permanently recording the visible image on a recording medium such as photographic film). The present invention is concerned with the read-out step in the aforesaid system.

A method and an apparatus in accordance with the pre-characterizing clause of the independent claim are disclosed, for example, in EP—A—0032521 or US—A—4276473.

The read-out of the radiation image stored in the stimulable phosphor is conducted by exposing the stimulable phosphor carrying radiation energy stored therein to stimulating rays which cause the stimulable phosphor to emit light in proportion to the radiation energy, and photoelectrically detecting the emitted light. Desirably, a sheet or a plate provided with a stimulable phosphor layer (hereinafter referred to as the recording material) is two-dimensionally scanned with a light beam such as laser beam, and the light emitted from the recording material upon stimulation thereof is sequentially detected by use of a photodetector such as a photomultiplier to obtain an image signal. In this case, the two-dimensional scanning is conducted by scanning the recording material provided with the stimulable phosphor layer with the light beam in the main scanning direction and the sub-scanning direction. For this purpose, the recording material is moved in one direction, and an optical scanning system for scanning the recording material at right angles to the moving direction of the recording material is used. Alternatively, the recording material is maintained stationary, and an optical scanning system for scanning the recording material both in the main scanning direction and in the sub-scanning direction is used. The former method using the optical scanning system for scanning only in one direction is employed in many cases since the optical scanning system is far less expensive than the optical scanning system for scanning in two directions. However, in the former method, it is an important requirement to move the recording material in one direction at a stable speed. Namely, when the recording material is moved at a predetermined speed in one direction for the sub-scanning and, at the same time, scanned with a light beam for the main scanning at right angles to the sub-scanning direction, unless the recording material is moved very accurately at a predetermined, constant speed, nonuniformity occurs in the read-out operation and makes it impossible to obtain a visible image having a uniform image density at the subsequent reproducing step. Therefore, a high accuracy is required in the sub-scanning, necessitating a holding means and a moving mechanism for the recording material both of which have high-accuracy and are of expensive construction.

As the mechanism for moving the recording material in the sub-scanning direction, various methods have heretofore been known. For example, a flexible sheet-like recording material is closely contacted with the peripheral surface of a drum by use of clamping devices or pinch rolls, and the drum is rotated to move the recording material. In another method, a suction box is installed at a part inside of a drum to make a sheet-like recording material adhere to a part of the peripheral surface of the drum corresponding to said part by suction force, and the drum is rotated to move the recording material. Alternatively, a suction box is positioned inside of a belt, and a plate-like recording material is placed on the belt and carried. In these methods, clamping devices or a suction box is necessary to closely maintain the recording material in close contact with the drum or the belt. In addition, use of the suction box is disadvantageous from the practical viewpoint since the blower for generating the suction force generates noise and vibrations. Vibrations of the blower present a very real problem particularly in a read-out apparatus which is required to achieve feed of the recording material at a high accuracy and which incorporates a precise optical scanning system.

The problem underlying the present invention is to provide a radiation image read-out method in which a simplified mechanism is employed for fixing the phosphor sheet to the sheet-holding conveyor.

In a radiation image read-out method comprising the steps of the pre-characterizing portion of claim 1 this problem is solved according to the present invention in that said stimulable phosphor sheet is provided with a magnetic material layer on its other surface, said surface contacting at least a part of a surface of said conveyor, which is in the form of a belt, by magnetic attraction, the belt being provided with a magnet layer thereon, or a magnet being mounted adjacent to the belt.

Claims 2 and 4 each define a radiation image read-out apparatus which solves the above mentioned problem.

An important feature of the claimed invention is the use of magnetic attraction as the means for closely contacting the stimulable phosphor sheet with the surface of the belt.

Holding sheets on a table and fixing the sheets on the surface of the table by means of magnetic attraction using additional metal strips is known from US—A—3777163. However, in this prior art structure the table is rigorously flat in order to avoid a risk of deterioration of the sheets to be supported on the surface of the table. Due to the rigid structure of the table, the movement thereof in a predetermined scanning direction is restricted and requires a complicated driving mechanism.

In the embodiments of the present invention, a stimulable phosphor sheet provided with a stimulable phosphor layer on one surface and a magnetic material layer on the opposite surface is employed, and a magnet for magnetically attracting the magnetic material layer of the stimulable phosphor sheet is positioned on or within the surface of the belt. The stimulable phosphor sheet is adhered to the surface of the belt by magnetic attraction, and the belt is driven to move the stimulable phosphor sheet. At the same time, the stimulable phosphor sheet is scanned with a light beam at right angles to the moving direction of the stimulable phosphor sheet.

In the present invention, since adhesion of the stimulable phosphor sheet to the surface of the belt is effected by magnetic attraction, it is unnecessary to use clamp devices or a suction box, the construction of the read-out apparatus is simplified, and the problems with regard to noise and vibrations are solved. Further, since no mechanism projecting towards the surface of the stimulable phosphor sheet, such as clamp device or pinch roll, is required a scanning light source and a light condenser can be positioned near to the surface of the stimulable phosphor sheet as in the case of the conventional method using the suction box. Namely, the present invention has the advantage that noise and vibrations do not occur as in the case of the conventional method using the clamping devices or pinch rolls, and also the advantage that the scanning and read-out system can be positioned near to the surface of the stimulable phosphor sheet as in the case of the conventional method using the suction box. The present invention is further advantageous in that the construction of the scanning and read-out system is simplified compared with the scanning and read-out system according to these conventional methods. Another advantage of the present invention is that read-out can be conducted economically.

The belt-like sheet holding body employed in the present invention should preferably be an endless belt. However, it is also possible to employ a reciprocation type belt, a wind-up type belt which is wound up from one roll to the other roll, or the like.

The magnet employed in the present invention may be a permanent magnet or an electromagnet. An electromagnet is advantageous in that the stimulable phosphor sheet can be easily loaded on and unloaded from the belt. The magnet may extend over the entire surface of the belt-like sheet holding body, or may extend only partially on the surface of the belt-like sheet holding body insofar as the magnet size is sufficiently large to attract the stimulable phosphor sheet. Alternatively, the magnet may be positioned at a predetermined part inside of the belt-like sheet holding body.

The moving direction of the stimulable phosphor sheet moved by the driving of the belt-like sheet holding body should preferably be employed as the sub-scanning direction of the two-dimensional scanning, and the scanning direction of the light beam at right angles to the moving direction of the stimulable phosphor sheet should be employed as the main scanning direction.

Brief Description of the Drawings

Figure 1 is a perspective view showing an embodiment of the apparatus for carrying out the radiation image read-out method in accordance with the present invention, and

Figure 2 is a perspective view showing another embodiment of the apparatus for carrying out the radiation image read-out method in accordance with the present invention.

Description of the Preferred Embodiments

The present invention will hereinbelow be described in further detail with reference to the accompanying drawings.

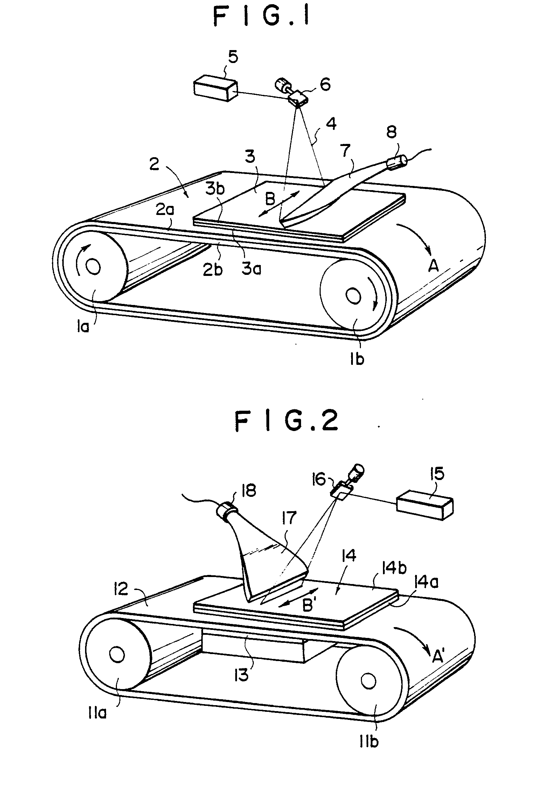

In Figure 1, a magnet layer 2a is overlaid on the surface of an endless belt 2 driveably supported around a pair of rollers 1a and 1b, and a stimulable phosphor sheet 3 is closely contacted with the magnet layer 2a by magnetic attraction. The endless belt 2 is driven in the direction indicated by the arrow A by the rotation of the rollers 1a and 1b. At the same time, the stimulable phosphor sheet 3 is exposed to and scanned with a light beam 4, which is emitted from a laser beam source 5 via a galvanometer mirror 6, in the direction indicated by the arrow B at right angles to the moving direction A of the endless belt 2. In this manner, the stimulable phosphor sheet 3 is two-dimensionally scanned with the light beam 4. Namely, sub-scanning is effected in the driving direction A of the endless belt 2, and main scanning is effected in the direction B at right angles to the driving direction A of the endless belt 2. The endless belt 2 comprises the magnet layer 2a overlaid on a flexible, endless belt-like substrate 2b.

The stimulable phosphor sheet 3 is provided with a magnetic material layer 3a and a stimulable phosphor layer 3b. In the stimulable phosphor layer 3b, an image of a radiation passing through an object is stored in advance. When the stimulable phosphor sheet 3 is exposed to the light beam 4, the exposed portion thereof emits light upon stimulation thereof. The emitted light is condensed by a total reflection type light guiding sheet 7, which is made by shaping an acrylic plate, and detected by a photodetector 8 such as photomultiplier to obtain an image signal. The image signal is obtained in time sequence according to the two-dimensional scanning, and used for the image processing and reproducing.

Specifically, the stimulable phosphor sheet 3 has the magnetic material layer 3a coated on the rear surface of a substrate and comprising a binder and magnetic particles dispersed in the binder, and the stimulable phosphor layer 3b coated on the front surface of the substrate. Alternatively, the substrate may be omitted, and the magnetic material layer 3a may serve as the substrate.

The magnet 2a is constituted by a ferromagnetic material layer overlaid on the surface of the flexible substrate 2b, and may be either a permanent magnet or an electromagnet wherein soft iron is magnetized by use of a magnetic field when necessary. An electromagnet is advantageous in that the stimulable phosphor sheet 3 can be handled easily when loading it on the endless belt 2 or unloading it from the endless belt 2 and, therefore, the loading and unloading operations are facilitated.

When the endless belt 2 having the construction as described above is used, the stimulable phosphor sheet 3 is closely contacted with the surface of the magnet 2a formed on the surface of the endless belt 2 by magnetic attraction, and it is unnecessary to use a special means for clamping the stimulable phosphor sheet 3 or fixing it by suction force generated by a blower or the like. Therefore, the light input face of the light guiding sheet 7 can be positioned near to the surface of the stimulable phosphor sheet 3, and read-out can be conducted in the absence of noise or vibrations due to a blower or the like.

Even when the stimulable phosphor sheet 3 has a somewhat high rigidity or involves curling, it can be closely contacted with the surface of the magnet 2a formed around the endless belt 2 by increasing the magnetic attraction.

Further, in the embodiment of Figure 1, the manner of operation need not be changed even when the size of the stimulable phosphor sheet 3 is changed. Accordingly, the apparatus is very easy to handle compared with a conventional apparatus using a clamping means wherein the positions of the clamps must be changed according to the size of the stimulable phosphor sheet.

Figure 2 shows another embodiment of the apparatus for carrying out the radiation image read-out method in accordance with the present invention. In Figure 2, a plate-like magnet 13 is positioned within an endless belt 12 driveably supported around rollers 11a and 11b. The magnet 13 may be either a permanent magnet or an electromagnet as in the embodiment shown in Figure 1. The magnet 13 is fixed in a predetermined position, and the endless belt 12 is rotated with the inner surface thereof sliding on the outer surface of the magnet 13 or slightly spaced apart from the outer surface of the magnet 13. The magnet 13 is secured along the inner surface of the endless belt 12. The endless belt 12 is made of a material permeable to magnetic flux.

When a stimulable phosphor sheet 14 provided with a magnetic material layer 14a on the rear side and a stimulable phosphor layer 14b on the front side is fed onto the surface of the endless belt 12, the stimulable phosphor sheet 14 is magnetically attracted to and closely contacted with the portion of the surface of the endless belt 12 within which the magnet 13 is positioned. As the endless belt 12 is driven around the rollers 11a and 11b, the stimulable phosphor sheet 14 is moved in the sub-scanning direction indicated by the arrow A'. At the same time, the stimulable phosphor sheet 14 is exposed to a laser beam emitted from a laser beam source 15 and deflected in the main scanning direction B' by a scanning mirror 16. In this manner, the stimulable phosphor sheet 14 is scanned with the laser beam in two directions. When exposed to the laser beam, the stimulable phosphor sheet 14 emits light upon stimulation thereof, and the emitted light is condensed in a photodetector 18, such as photomultiplier, via a light guiding sheet 17 for condensing the light, thereby to obtain an image signal in time sequence. The light guiding sheet 17 is a total reflection type light guiding sheet having, at one end, a light input face extending in the main scanning direction B' near to the surface of the stimulable phosphor sheet 14 and, at the other end, a light output face opposed to a light receiving face of the photodetector 18. The light guiding sheet 17 is made, for example, by shaping an acrylic resin plate or the like.

In the embodiment of Figure 2, since the magnet 13 is installed only at a part of the surface of the endless belt 12, only a part of the stimulable phosphor sheet 14 fed onto the endless belt 12 is magnetically attracted and closely contacted with said part of the surface of the endless belt 12, and the other portions of the stimulable phosphor sheet 14 are naturally separated from the surface of the endless belt 12 because of the absence of the action of magnetic attraction. Therefore, the stimulable phosphor sheet 14 can be easily unloaded from the endless belt 12.

Also in the embodiment of Figure 2, since the stimulable phosphor sheet 14 is closely contacted with the endless belt 12, the stimulable phosphor sheet 14 is moved at a stable speed in the direction A' as the endless belt 12 is driven, and the sub-scanning can thereby be conducted. Further, since no clamp is used, the light guiding sheet 17 can be positioned near to the surface of the stimulable phosphor sheet 14, and no special operations are necessary even when the size of the stimulable phosphor sheet 14 is changed. In addition, since a suction means such as blower is not used, problems with regard to noise and vibrations do not occur.

**Claims**

1. A radiation image read-out method comprising the steps of:
   i) closely contacting a stimulable phosphor sheet (3, 14) which is provided with a stimulable phosphor layer (3b, 14b) carrying a radiation image stored therein with a conveyor (2);
   ii) driving said conveyor (2) to move said stimulable phosphor sheet in one direction;
   iii) scanning one surface of the stimulable phosphor sheet (3, 14) with a light beam (4) at right angles to said movement direction of the stimulable phosphor sheet (3, 14) by use of a light beam scanning system (5, 6; 15, 16) thereby two-dimensionally scanning the surface of said stimulable phosphor sheet (3, 14);
   iv) causing said stimulable phosphor sheet (3, 14) to release the radiation energy stored therein as light emission by said scanning with the light beam; and
   v) photoelectrically detecting the emitted light to obtain an image signal,
   characterized in that said stimulable phosphor sheet (3, 14) is provided with a magnetic material layer (3a, 14a) on its other surface, said surface contacting at least a part of a surface of said conveyor, which is in the form of a belt (2, 12), by magnetic attraction, the belt being provided with a magnet layer (2a) thereon, or a magnet (13) being mounted adjacent to the belt.

2. A radiation image read-out apparatus comprising:
   i) a conveyor (2) supporting a stimulable phosphor sheet (3), which is provided with a stimulable phosphor layer (3b) carrying a radiation image stored therein;
   ii) an optical scanning system (5, 6) for causing stimulating rays to scan one surface of said stimulable phosphor sheet (3), while the other surface of said sheet is in close contact with said conveyor (2), from above and at right angles to the moving direction of said conveyor;
   iii) a drive means (1a, 1b) for driving said conveyor (2); and
   iv) a photoelectric converter (7, 8) for receiving the light emitted from said stimulable phosphor sheet (3) exposed to said stimulating rays and photoelectrically converting the emitted light into an electrical signal,
   characterized in that a magnet layer (2a) is provided on the surface of the conveyor, which is in the form of a belt (2), for holding the phosphor sheet (3), which is provided with a magnetic material layer (3a) on its other surface, on said conveyor by closely contacting said stimulable phosphor sheet (3) with said conveyor (2) by magnetic attraction acting between said magnet layer (2a) and said magnetic material layer (3a) of said stimulable phosphor sheet.

3. An apparatus as defined in claim 2, wherein said optical scanning system (5, 6) serves as a main scanning means, and said drive means (1a, 1b) serves as a sub-scanning means.

4. A radiation image read-out apparatus comprising:
   i) a conveyor (12),
   ii) a means for feeding a stimulable phosphor sheet (14), which is provided with a stimulable phosphor layer (14b) carrying a radiation image stored therein onto the conveyor (12),
   iii) a main scanning optical system (15, 16) for causing stimulating rays to scan one surface of said stimulable phosphor sheet (14) from above and at right angles to the moving direction of said conveyor (12),
   iv) a sub-scanning means (11a, 11b) for driving said conveyor (12), and
   v) a photoelectric converter (18) for receiving the light emitted from said stimulable phosphor sheet (14) exposed to said stimulating rays and photoelectrically converting the emitted light into an electrical signal,
   characterized in that a magnet (13) is mounted underneath the conveyor (12), which is in the form of a belt, at a predetermined position along the path of movement of the conveyor (12), in that a magnetic material layer (14a) is provided on the other surface of said phosphor sheet (14), and in that the phosphor sheet during scanning is closely contacted with a part of the surface of said conveyor (12) by magnetic attraction acting between said magnet (13) and said magnetic material layer (14a) of said stimulable phosphor sheet.

5. An apparatus as defined in claim 4 wherein said photoelectric converter is provided with a total reflection type light guiding sheet (17) having, at one end, a light input face extending in the main scanning direction near to the surface of said stimulable phosphor sheet (14) and, at the other end, a light output face adjacent to a light receiving face of said photoelectric converter (18).

**Patentansprüche**

1. Verfahren zum Auslesen eines Strahlungsbildes, umfassend die Schritte:
   i) ein anregbares Leuchtstoffblatt (3, 14), das mit einer anregbaren Leuchtstoffschicht (3b, 14b), die ein in sich gespeichertes Strahlungsbild trägt, ausgestattet ist, wird in enge Berührung mit einem Förderer (2) gebracht;
   ii) der Förderer (2) wird angetrieben, so daß er das anregbare Leuchtstoffblatt in eine Richtung bewegt;
   iii) eine Seite des anregbaren Leuchtstoffblatts (3, 14) wird mit einem Lichtstrahl (4) unter rechten Winkeln zu der Bewegungsrichtung des anregbaren Leuchtstoffblatts (3, 14) abgetastet, indem ein Lichtstrahl-Abtastsystem (5, 6; 15, 16) verwendet wird, um dadurch die Seite des anregbaren Leuchtstoffblatts (3, 14) zweidimensional abzutasten;

iv) das anregbare Leuchtstoffblatt (3, 14) wird durch Abtasten mit dem Lichtstrahl veranlaßt, die in ihm gespeicherte Strahlungsenergie als Lichtemission freizugeben; und

v) das emittierte Licht wird photoelektrisch erfaßt, um ein Bildsignal zu erhalten,

dadurch gekennzeichnet, daß das anregbare Leuchtstoffblatt (3, 14) auf seiner anderen Seite mit einer aus magnetischem Material bestehenden Schicht (3a, 14a) ausgestattet ist, die zumindest einen Teil einer Oberfläche des in Form eines Riemens (2, 12) ausgebildeten Förderers durch magnetische Anziehung berührt, wobei der Riemen mit einer auf dem Riemen befindlichen Magnetschicht (2a) ausgestattet oder benachbart zu dem Riemen ein Magnet (13) angeordnet ist.

2. Vorrichtung zum Auslesen eines Strahlungsbildes, umfassend:

i) einen Förderer (2), der ein anregbares Leuchtstoffblatt (3) trägt, welches mit einer anregbaren Leuchtstoffschicht (3b) ausgestattet ist, die ein in ihr gespeichertes Ladungsbild trägt;

ii) ein optisches Abtastsystem (5, 6), das von oben und unter rechten Winkeln zur Bewegungsrichtung des Förderers mit Anregungsstrahlen eine Seite des anregbaren Leuchtstoffblatts (3) abtastet, während die andere Seite des Blatts in enger Berührung mit dem Förderer (2) steht;

iii) eine Antriebsvorrichtung (1a, 1b) zum Antreiben des Förderers (2); und

iv) einen photoelektrischen Wandler (7, 8), der von dem den Anregungsstrahlen ausgesetzten anregbaren Leuchtstoffblatt (3) emittiertes Licht empfängt und das emittierte Licht photoelektrisch in ein elektrisches Signal umsetzt,

dadurch gekennzeichnet, daß auf einer Seite des in Form eines Riemens (2) ausgebildeten Förderers eine Magnetschicht (2a) vorgesehen ist, um das auf seiner anderen Seite mit einer Schicht (3a) aus magnetischem Material versehenen Leuchtstoffblatt an dem Förderer zu halten, indem das anregbare Leuchtstoffblatt (3) durch magnetische Anziehung zwischen der Magnetschicht (2a) und der aus magnetischem Material bestehenden Schicht (3a) des anregbaren Leuchtstoffblatts in enger Berührung mit dem Förderer (2) gehalten wird.

3. Vorrichtung nach Anspruch 2, bei der das optische Abtastsystem (5, 6) als Hauptabtasteinrichtung und die Antriebsvorrichtung (1a, 1b) als Unterabtasteinrichtung dient.

4. Vorrichtung zum Auslesen eines Strahlungsbildes, umfassend:

i) einen Förderer (12);

ii) eine Einrichtung zum Zuführen eines anregbaren Leuchtstoffblatts (14), das mit einer in sich ein gespeichertes Strahlungsbild tragenden, anregbaren Leuchtstoffschicht (14b) ausgestattet ist, zu einem Förderer (12);

iii) ein optisches Hauptabtastsystem (15, 16), das mit Anregungsstrahlen eine Seite des anregbaren Leuchtstoffblatts (14) von oben unter rechten Winkeln zur Bewegungsrichtung des Förderers (12) abtastet;

iv) eine Unterabtasteinrichtung (11a, 11b) zum Antreiben des Förderers (12); und

v) einen photoelektrischen Wandler (18), der das von dem den Anregungsstrahlen ausgesetzten anregbaren Leuchtstoffblatt (14) emittierte Licht empfängt und das emittierte Licht photoelektrisch in ein elektrisches Signal umsetzt,

dadurch gekennzeichnet, daß unterhalb des Förderers (14), der als Riemen ausgebildet ist, an einer vorbestimmten Stelle entlang der Bewegungsbahn des Förderers (12) ein Magnet (13) montiert ist, daß auf der anderen Seite des Leuchtstoffblatts (14) eine aus magnetischem Material bestehende Schicht (14a) vorgesehen ist, und daß das Leuchtstoffblatt während der Abtastung durch magnetische Anziehung zwischen dem Magneten (13) und der aus magnetischem Material bestehenden Schicht (14a) des anregbaren Leuchtstoffblatts in enger Berührung mit einem Teil der Oberfläche des Förderers gehalten wird.

5. Vorrichtung nach Anspruch 4, bei der der photoelektrische Wandler mit einem Lichtleiterblatt (17) vom Totalreflexionstyp ausgestattet ist, der an einem Ende eine Lichteintrittsfläche aufweist, die sich in Hauptabtastrichtung in der Nähe der Oberfläche des anregbaren Leuchtstoffblatts (14) erstreckt, und am anderen Ende eine Lichtausgangsseite in der Nachbarschaft einer Lichtempfangsfläche des photoelektrischen Wandlers (18) aufweist.

**Revendications**

1. Un procédé de détection d'images de radiation comprenant les étapes suivantes:

i) mise en contact étroit avec un transporteur ou convoyeur (2) d'une feuille (3, 14) de matériau luminescent excitable pourvue d'une couche (3b, 14b) de matériau luminescent excitable dans laquelle est stockée une image de radiation;

ii) entraînement de ce transporteur (2) pour déplacer cette feuille de matériau luminescent excitable dans une direction;

iii) exploration d'une surface de la feuille (3, 14) de matériau luminescent excitable à l'aide d'un rayon lumineux (4) à angle droit de la direction de déplacement de la feuille (3, 14) de matériau luminescent excitable par utilisation d'un système d'exploration par rayon lumineux (5, 6, 15, 16) pour explorer ainsi, en deux dimensions, la surface de cette feuille (3, 14) de matériau luminescent excitable;

iv) libération de l'énergie de radiation stockée dans cette feuille (3, 14) de matériau luminescent excitable par émission de lumière à l'aide de cette exploration à l'aide du rayon lumineux; et

v) détection photo-électrique de la lumière émise pour obtenir un signal image,

caractérisé en ce que cette feuille de matériau luminescent excitable (3, 14) est pourvue d'une couche (3a, 14a) de matériau magnétique sur son autre surface, cette surface entrant au contact d'au moins une partie de la surface de ce transporteur présentant la forme d'une courroie (2, 12) par attraction magnétique, la courroie étant pourvue sur elle d'une couche magnétique (2a) ou d'un aimant (13) monté adjacent à la courroie.

2. Dispositif de détection d'images de radiation comprenant:

i) un transporteur (2) supportant une feuille (3) de matériau luminescent excitable pourvue d'une couche (3b) de matériau luminescent excitable dans laquelle est stockée une image de radiation;

ii) un dispositif (5, 6) d'exploration optique pour amener les rayons de stimulation à explorer une surface de cette feuille (3) de matériau luminescent excitable tandis que l'autre surface de cette feuille est en contact étroit avec ce transporteur (2), au-dessus et à angle droit de la direction de déplacement par ce transporteur;

iii) des moyens d'entraînement (1a, 1b) pour entraîner ce transporteur (2); et

iv) un convertisseur photo-électrique (7, 8) pour recevoir la lumière émise par cette feuille (3) de matériau luminescent excitable, exposée à ces rayons d'excitation, et transformer photo-électriquement la lumière émise en un signal électrique, caractérisé en ce qu'une couche magnétique (2a) est appliquée à la surface du transporteur présentant la forme d'une courroie pour maintenir la feuille (3) de matériau luminescent qui est pourvue d'une couche (3a) de matériau magnétique sur son autre surface, sur ce convoyeur, par mise en contact étroit de cette feuille (3) de matériau luminescent excitable avec ce transporteur (2) par attraction magnétique agissant entre cette couche magnétique (2a) et cette couche de matériau magnétique (3a) de cette feuille de matériau luminescent excitable.

3. Dispositif selon la revendication 2, dans lequel ce système optique d'exploration (5, 6) sert de moyens d'exploration principale et les moyens d'entraînement (1a, 1b) servent de moyen d'exploration secondaire.

4. Dispositif de détection d'images de radiation comprenant:

i) un transporteur (12);

ii) des moyens d'introduction d'une feuille (14) de matériau luminescent excitable pourvus d'une couche (14b) de matériau luminescent excitable dans laquelle est stockée une image de radiation, sur le transporteur (12);

iii) un système optique d'exploration principale (15, 16) pour amener ces rayons d'excitation à explorer une surface de cette feuille (14) de matériau luminescent excitable du dessus et à angle droit de la direction de déplacement de ce transporteur (12);

iv) des moyens d'exploration secondaire (11a, 11b) pour entraîner ce transporteur (12); et

v) un convertisseur photo-électrique (18) pour recevoir la lumière émise par cette feuille (14) de matériau luminescent excitable exposée à ces rayons d'excitation et transformer photo-électriquement la lumière émise en un signal électrique, caractérisé en ce qu'un aimant (13) est monté en-dessous du transporteur (12) ayant la forme d'une courroie à une position prédéterminée le long du trajet de déplacement par le transporteur (12), en ce qu'une couche (14a) de matériau magnétique est prévue sur l'autre surface de cette feuille (14) de matériau luminescent et en ce que la feuille de matériau luminescent, pendant l'exploration, entre un contact étroit avec une partie de la surface de ce transporteur (12) par une attraction magnétique agissant entre cet aimant (13) et cette couche (14a) de matériau magnétique de cette feuille de matériau luminescent excitable.

5. Dispositif selon la revendication 4, dans lequel ce convertisseur photo-électrique est pourvu d'une feuille (17) de guidage de la lumière du type à réflexion totale, présentant à une de ses extrémités une face d'entrée de la lumière s'étendant selon la direction d'exploration principale tout près de la surface de cette feuille (14) de matériau luminescent excitable et, à son autre extrémité, une face de sortie de la lumière adjacente à une face de réception de la lumière de ce convertisseur (18) photo-électrique.

# F I G . 1

# F I G . 2